# EUROPEAN PATENT SPECIFICATION

(11) **EP 2 030 510 B1**
(45) Date of publication and mention of the grant of the patent: **27.10.2010**
(21) Application number: 07016754.9
(22) Date of filing: 27.08.2007
(51) Int. Cl.: A23G 1/36

(54) **Fat blend for heat-resistant chocolate**
Fettmischung für wärmebeständige Schokolade
Mélange de graisses pour chocolat résistant à la chaleur

(43) Date of publication of application: 04.03.2009
(73) Proprietor: Kraft Foods R & D, Inc., Northfield, IL 60093 (US)
(72) Inventor: Balzer, Hartmut Heinrich, Dr., 85238 Petershausen (DE); Paggios, Konstantinos, 81541 München (DE); Williams, Maria Florencia, 80335 München (DE); Hecht, Gerhard, 87600 Kaufbeuren (DE); Thiele, Martin, 83607 Holzkirchen (DE); Simbuerger, Stephan, 81375 München (DE); Redeborn, Sarah, 19267 Sollentuna (DE); Kleman, Lawrence P., Annandale Hunterdon New Jersey 08801 (US)
(74) Representative: HOFFMANN EITLE

(56) References cited:
- EP-A- 0 297 720
- EP-A- 1 862 077
- WO-A-99/65323
- WO-A-03/080779
- DIMICK P S: "FORMULATION OF MILK CHOCOLATE USING MILKFAT FRACTIONS" AUSTRALIAN JOURNAL OF DAIRY TECHNOLOGY, DAIRY INDUSTRY ASSOCIATION OF AUSTRALIA, MELBOURNE, AU, vol. 51, no. 2, October 1996 (1996-10), pages 123-126, XP000633449 ISSN: 0004-9433
- LOHMAN M H ET AL: "EFFECT OF MILK FAT FRACTIONS ON FAT BLOOM IN DARK CHOCOLATE" JOURNAL OF THE AMERICAN OIL CHEMISTS' SOCIETY, AOCS PRESS, CHAMPAIGN, IL, US, vol. 71, no. 3, 1 March 1994 (1994-03-01), pages 267-276, XP000427179 ISSN: 0003-021X

## Description

### Field of the invention

The present invention relates to a heat-resistant cocoa confection composition comprising cocoa butter and a liquid fat in a weight ratio of 33:66 to 20:80. A further object of the invention is a fat blend and its use for increasing the bloom-stability and preventing fat blooming of a cocoa confection composition. The blend can be used in a heat-resistant chocolate (HRC) or chocolate type composition, which is prevented from fat-blooming and exhibits an increased bloom-stability.

### Background of the invention

Conventionally manufactured chocolate or the like usually consists of sugars, cocoa solids and protein (usually from milk) which are homogeneously dispersed in a fat phase originating mainly from cocoa butter and a limited amount of other fats, for example milk chocolate containing a low amount of milk fat. In any case, the fat composition of a conventional chocolate is dominated by cocoa butter. Conventional chocolate, however, cannot be kept at temperatures above 30°C without getting soft. Consequently, as it loses its mechanical strength, the chocolate becomes sticky and loses its shape.

Additionally, after cooling the chocolate is susceptible to fat bloom induced by uncontrolled fat re-crystallization. Many attempts have been made to try to retard appearance of bloom of conventional chocolate products. One of the most common approaches to solve this issue is the addition of a low amount of inhibitors, such as milk fat, or specific vegetable fats. Although they may have some effect on controlling fat bloom under standard conditions (max. 30°C), they fail in controlling fat bloom that occurs after heating the chocolate to a point where it is completely liquid and then cooled. In other words, they fail to ease the need to re-temper after melting.

One of the main requirements of a HRC product is to maintain its appealing appearance, form stability and fat-bloom resistance when it is subjected to elevated or fluctuating temperatures.

Many different attempts have been made to provide a heat resistant chocolate by increasing the heat stability of chocolate, the two most popular attempts being
i) the incorporation of high melting oils and fats and
ii) the addition of electrophilic substances which improve the integrity of the chocolate structure at higher temperature by delivering a three dimensional skeleton of non-fat solids.

However, despite all these efforts, no commercial product exists as both attempts suffer from serious drawbacks.

**ad i**) In particular, while preventing fat bloom, the use of high melting fats and/or oils results in a waxy taste of the chocolate because a certain portion of the fat composition does not melt in the mouth. Consequently, in order to avoid a strong waxy taste, the melting points of these fats should not exceed a certain temperature, i.e. max. 40°C. This, however, results in a limited heat stability.

Examples for achieving heat-resistance by using high melting fat composition are described in JP 62122556 and JP 56127052. JP 62122556 uses the blend of a fat or oil with a high γ-linolenic acid content and a heat resistant butter as at least part of the fat or oil content of the chocolate composition. The solid fat content (SFC) of the total oil is adjusted to ≈50 at 20°C, ≈25 at 30°C and ≤20 at 35°C. JP 56127052 A describes a cocoa butter substitute comprising sal seed middle part oil, sal seed oil and palm middle part oil as well as a chocolate composition comprising the same.
JP 2003299442 relates to a seeding material rich in 1,3-behenoyl, 2-oleolglycerol. This triglyceride has a high melting point, hence, it can be assumed that the chocolate mass will be reseeded once it is heated above the cocoa butter melting point, however, it will loose its functionality at around 40°C (above the melting point of the seeding crystals), and thus the resulting HRC will not be able to withstand temperatures around 50°C.
**ad ii**) Many patents describe the incorporation of electrophilic substances to achieve a heat resistant structure even at temperatures above 40°C. This process easily delivers form stability to the products, however, another aspect which is often ignored is the selection of an appropriate fat system. Conventional fats, such as cocoa butter or cocoa butter equivalents, provide a good taste but are highly susceptible to fat bloom, particularly in a system containing cocoa butter as the major fat phase. Other fats, such as cocoa butter replacers (CBR), are quite stable against fat bloom but have a taste which is not appealing. Use of conventional fats in HRC are for example described in several patents of Davila & Finkel (see e.g. US 6,488,979;; US 2003/0082291; EP 1 091 653).

US Patent 5,160,760 describes a heat-resistant chocolate consisting essentially of a mixture of a water-in-oil emulsion and a chocolate base material, and wherein the mixture contains an emulsifying agent. A water soluble material selected from saccharides and sugar alcohols is dissolved in the aqueous phase of the water-in-oil emulsion prior to mixing the same with the chocolate base material. EP 1 673 977 pertains to an improved process for manufacturing heat resistant chocolate or chocolate-like confectionery products wherein conventional temperature chocolate mass or chocolate-like confectionery mass which has been mixed with a water-in-oil emulsion or has an increased water content, is moulded and then subjected to a microwave treatment prior to and/or during cooling. This additional microwaving step introduces an accelerated skeleton formation and thereby form stability. However, US 5,160,760 refers to standard chocolate, milk chocolate and dark chocolate and does not specify the fat system used for preparing the chocolate mass, and EP 1 673 977 uses cocoa butter which tends to show fat bloom when exposed to heat.

Both US 6,165,540 and EP 1 294 235 describe cocoa butter alternatives of vegetable origin, but they are said to have physico-chemical properties similar to those of cocoa butter, hence with the same limitations as cocoa butter (need to temper after melting). To prevent fat-bloom over shelf-life, EP 1 294 235 employs seeding crystals. However, this approach is limited by the melting point of the seeding crystals, and cannot prevent fat bloom at temperatures above this melting point.

Other solutions include the use of non-polymorphic fat systems such as Salatrim / Benefat^{®} or monomorphic cocoa butter substitute fats (CBS). Salatrim - originally introduced as low calorie fat - is a triglycerides that contains a combination of long chain fatty acids (predominantly stearic acid) and short chain fatty acids (predominantly acetic and/or propionic and/or butyric acids). Though there is no need for tempering; this fat is an artificial fat system and therefore not preferred.

Cocoa butter substitute fats (CBS) which are fractionated, non-hydrogenated vegetable fats of lauric origin based on palm kernel oil are bloom stable without the need of a temper step when cooled under manufacturing conditions, i.e. when the confectionery product is cooled quickly (e.g. in a cooling tunnel at maximum 10°C). CBS is susceptible to bloom when it is mixed with cocoa butter at >5% levels or allowed to crystallize slowly under uncontrolled conditions. Therefore, its effect is unsatisfactory when a HRC product is exposed to elevated temperature and subsequently returns to ambient conditions within the supply chain.

One patent describing a non-blooming fat system which may be applied in HRC is US 5,108,769. Such a fat system is obtained by preparing a structured fat emulsion by emulsifying glycerol (6%) and a mono-diglyceride emulsifier into a partially hydrogenated soybean fat. This fat system, however, does not contain cocoa butter which deteriorates the taste, but more importantly it contains partially hydrogenated fat in which the content of trans-fatty acids (TFA) is too high considering the current legal requirements (at least due to the legislation in many countries).

EP 0 297 720 describes a chocolate comprising a specific fractionated soft fat of laurin fat.

In view of the above, the object of the present invention is to provide a special fat blend which can be used in a heat-resistant chocolate (HRC) which does not exhibit fat bloom while having a taste that is close to standard chocolate. The phenomenon of "fat bloom" is caused by uncontrolled crystallization when the chocolate is stored at temperature in the range of 30-50°C for a certain time and subsequently cooled to ambient temperature (e.g. 15-25°C). It results in grey spots or other patterns on the product surface, thereby giving the chocolate an undesirable appearance.

### Summary of the invention

The present invention relates to a heat-resistant cocoa confection composition comprising cocoa butter and a liquid fat, as defined below, in a weight ratio of 33:66 to 20:80, preferably 25:75 to 20:80, wherein the blend has a SFC (solid fat content at 20°C) of less than 45%, preferably less than 40% and more preferably less than 35%, wherein the liquid fat is different from cocoa liquor and is miscible with cocoa butter at all mixing ratios. The pure liquid fat has a SFC at 20°C of 50% or less, preferably of 45% or less and more preferably of 40% or less.

The present invention further relates a blend as defined above and its use for increasing the bloom-stability and preventing fat bloom of a chocolate or chocolate-type composition.

The fat blend according to the present invention may for instance be used in a heat resistant chocolate in which the fat is entrapped in a matrix of electrophilic particles which form a 'skeleton'.

### Detailed description of the invention

When studying suitable fat blends for use in chocolate and chocolate type compositions, the present inventors surprisingly found that a blend of cocoa butter and a liquid fat in a weight ratio of 33:66 to 20:80, preferably 25:75 to 20:80, said blend having a SFC of less than 45%, preferably of less than 40% and more preferably of less than 35% at 20°C, results in a non-blooming fat system with a taste close to cocoa butter for use in HRC. Hence, the invention allows for the preparation of a heat-resistant chocolate product that can be commercialized without defects in appearance and taste. The liquid fat has a SFC of 50% or less, preferably 45% or less, and more preferably of 40% or less.

All percentages given herein are by weight unless indicated otherwise.

Within the present specification, the term "chocolate" is meant to encompass all cocoa confection products.

### Cocoa Butter

The cocoa butter used in the present invention is a standard commercial cocoa butter and can be added to the composition in the form of pure cocoa butter or as cocoa liquor.

In the present specification, the term "cocoa butter" refers to the pure prime pressed fat of the Theobroma cocoa seeds, with a pale, yellowish appearance. It is manufactured from sound beans which are at least well fermented, roasted, and which may also be alkalized. The cocoa butter is obtained from cocoa liquor typically processed by: filtration, degumming and deodorization. The odor/flavor of the resulting material is characteristic of deodorized cocoa butter produced from cocoa liquor and free from foreign flavors or odors.

A typical composition of the cocoa butter used in the present invention is:

| | |
|---|---|
| Fat | 99.9 g |
| - of which saturated | 61 g |
| - of which mono-unsaturated | 35.4 g |
| - of which poly-unsaturated | 3.5 g |
| - of which cholesterol | 2.7 mg |
| No trans-fatty-acids | |

Its main physical properties are described by the solid fat content (Pulsed NMR; IUPAC 2.150(b) (1987); AOCS Official method Cd 16b-93)

A preferred example of the cocoa butter used in the present invention has the following solid fat content (SCF):

| | |
|---|---|
| SFC 20°C | 79.9 % |
| SFC 25°C | 76.8 % |
| SFC 30°C | 54.8 % |
| SFC 35°C | 2.5 % |

### Liquid fat

In addition to cocoa butter, the cocoa confection composition according to the present invention comprises a liquid fat. The liquid fat is characterized in that it is different from cocoa liquor and in that it is fully compatible, i.e. miscible with cocoa butter at all mixing ratios. The term liquid fat expresses that at 20°C less than half of the fat is in the solid form. The liquid fat is further characterized by a SFC (solid fat content) of 50% or less at 20°C, preferably 45% or less and more preferably 40% or less.

The liquid fat used in the present invention is selected from the group consisting of palm oil, soya oil, rapeseed oil, sunflower oil, milk fat, or a mixture thereof. More preferably, the liquid fat is a fractionated, non-hydrogenated, refined non-lauric palm oil such as e.g. Biscuitine^{®} 300, Biscuitine^{®} 500 or the like, or anhydrous milk fat (AMF) or a mixture thereof.

One preferred example for the liquid fat used in the present invention is a shortening fat which is typically used for baking processes. Such a shortening fat is usually derived from palm oil which is non-lauric, fractionated and non-hydrogenated. One example of such a shortening fat to be used in the present invention has the following composition:

| Fat | |
|---|---|
| - of which saturated | 54 % |
| - of which mono-unsaturated | 36 % |
| - of which poly-unsaturated | 10 % |
| Trans-fatty-acids | 7 % |

A particular preferred example of such a shortening fat which may be used as the liquid fat according to the invention is Biscuitine^{®} 300 (Loders Cocklaan, Amsterdam). Biscuitine^{®} 300 usually has the following solid fat content:

| | |
|---|---|
| SFC 20°C | 35 % |
| SFC 25°C | 21 % |
| SFC 30°C | 13 % |
| SFC 35°C | 7 % |

Another preferred example for a suitable liquid fat is anhydrous milk fat (AMF). Within the present application, the term "anhydrous milk fat" refers to a water-in-oil emulsion containing at least 99.8% milk fat. It is obtained by a conventional physical separation and concentration process using fresh, pasteurized cows butter or cream.

Conventional anhydrous milk fat has a typical solid fat content of:

| | |
|---|---|
| SFC 20°C | 30 % |
| SFC 25°C | 14 % |
| SFC 30°C | 10 % |

Besides conventional milk fat, the invention does also comprise milk fat fractions that fulfil the requirements regarding SFC.

In the present invention, it is also possible to use a blend of two or more liquid fats having the characteristic solid fat content specified above and being miscible with cocoa butter at all mixing ratios.

### Mixing ratio

In the present invention, cocoa butter and liquid fat are mixed in a weight ratio of 33:66 to 20:80, preferably 25:75 to 20:80.

The mixture of cocoa butter and liquid fat can be added to the non-fat chocolate solids either during the chocolate base mass production in a conventional process of the manufacture of chocolate, or added together with the emulsion during a heat-resistant chocolate production process according to EP 1 673 977 A1, as long as the ratio of cocoa butter to liquid fat within the final composition falls within the range of 33:66 to 20:80, and preferably 25:75 to 20:80.

While keeping above mentioned mixing ratios of cocoa butter and liquid fat within the specified ratios, the fat system mixture is further characterized by its SFC. As such, the SFC at 20°C is less than 45%, preferably it is less than 40% and more preferably it is less than 35%.

As an example for illustration the SFC at 20°C for the binary mixture of standard cocoa butter and Biscuitine^{®} 300 is

| Percentage Cocoa butter | SFC at 20°C |
|---|---|
| 70 | 64.79 |
| 60 | 59.86 |
| 50 | 54.52 |
| 40 | 46.82 |
| 35 | 41.34 |
| 30 | 35.9 |
| 20 | 34.47 |
| 10 | 33.94 |
| 0 | 34.84 |

The fat system cocoa butter / Biscuitine^{®} 300 is blooming at a ratio of 35%:65% despite having a SFC <50%, but not at 30%:70% according to the panel results in Example 3.

Another example is the binary system cocoa butter and AMF (anhydrous milk fat)

| Percentage Cocoa butter | SFC at 20°C |
|---|---|
| 70 | 38.75 |
| 60 | 28.36 |
| 50 | 17.54 |
| 40 | 13.93 |
| 35 | 14 |
| 30 | 15.23 |
| 20 | 14.88 |
| 10 | 17.46 |

In this example, the SFC stays at a very low level even at high percentages of cocoa butter. Nevertheless, only the system below the ratios 33%:66% does resist in the fat bloom test.

Therefore, both requirements must be fulfilled: i) to keep the ratio cocoa butter / liquid fat of 33%:66% or below and ii) to have a SFC of the mixture of 50% or less at 20°C.

### Preparation of the heat resistant chocolate

The blend of cocoa butter and the liquid fat according to the invention is preferably used to prepare HRC in a process similar to EP 1 673 977. In particular, the chocolate base mass containing the blend of the invention is mixed with an agent containing water, and the resulting mixture is microwaved to establish a skeleton that delivers heat resistance. Such a heat-resistant chocolate does not exhibit uncontrolled fat crystallization (fat bloom) so that the product retains its homogeneous surface. The taste of the product is close to a conventional chocolate.

The present invention will be illustrated in detail below with reference to examples which are not intended to limit the scope of the claims.

### Example 1

### Chocolate base mass containing baking fat

Ingredients for the chocolate confection of the 'milk' No.1 and No.2 and 'white' type were mixed and refined according to Table 1. Mixing of ingredients (without a certain amount of Biscuitine^{®} and no lecithin) was carried out in a double-jacketed blender (Stephan^{®} mixer, Hameln, Germany) at 50°C (15 min., 1000 rpm) adjusting the total fat level at 24%. Refining was effected with a pilot plant 3-roll-refiner to a particle size of d90 < 30µm (Laser diffraction, Malvern). The base masses were conched with a pilot plant conche (60 kg). The remaining fat and lecithin were added during conching.

**Table 1**

| | **Milk Chocolate Confection No.1** | **Milk Chocolate Confection No.2** | **White Chocolate Confection** |
|---|---|---|---|
| Sugar | 45.75% | 45.75% | 45% |
| Cocoa liquor | 12.35% | 17,50% | |
| Cocoa butter | | | 6.7% |
| Skimmed milk powder | 18.0% | 16.75% | 20% |
| Lactose | | | 4.3% |
| Biscuitine^{®} 300 | 23.3% | 19.4% | 23.5% |
| Lecithin | 0.6% | 0.6% | 0.5% |
| **Total** | **100%** | **100%** | **100%** |
| | | | |
| Ratio cocoa butter to liquid fat | 22.0:78.0 | 32.8:67.2 | 21.3:78.7 |

An example for calculating the ratio of cocoa butter to liquid fat is given here for Milk Chocolate Confection No.1:

| | **Milk Chocolate Confection No.1** | **Thereof fat** | Liquid fat in No.1 | Cocoa butter fat in No.1 |
|---|---|---|---|---|
| Sugar | 45.75% | 0% | 0.0% | 0.0% |
| Cocoa liquor | 12.35% | 54% | 0.0% | 6.67% |
| Cocoa butter | 0.0% | 100% | 0.0% | 0.0% |
| Skimmed milk powder | 18.0% | 1% | 0.18% | 0.0% |
| Lactose | 0.0% | 0% | 0.0% | 0.0% |
| Biscuitine^{®} 300 | 23.3% | 100% | 23.3% | 0.0% |
| Lecithin | 0.6% | | 0.2% | 0.0% |
| **Total** | **100%** | | 23.68% | 6.67% |
| **Total fat** | | | 30.35% | |

Consequently, the ratio of cocoa butter to liquid fat is 22.0:78.0.

### Example 2

### Production of a heat-resistant 100-q chocolate tablet

A water-in-oil emulsion was prepared comprising 5.88 cocoa butter and 20.52 % of Biscuitine^{®} 300, 70.6 % sorbitol solution e.g. Sorbidex^{®} (30 % moisture) and 3.1 % PGPR (Polyglycerin-polyricinoleat (PGPR, E 476)). This emulsion was mixed with tempered chocolate in a ratio of 9.7 % emulsion and 90.3 % chocolate. The mixture was poured into a tablet mould and treated on a vibration table until the mass was evenly distributed. Prior to cooling the mould was placed in a conventional 3.3-kW microwave oven for 50 seconds. After sufficient (for example 20 min. at 5-10°C) cooling, the tablet was demoulded and packed.

### Example 3

### Procedure for fat bloom test

The fat bloom test procedure applied here is different to conventional fat bloom tests which typically involve temperature cycling between 20° and 26°C, since the application of the invention is for heat resistant chocolate. Therefore, the products need to withstand temperatures up to 50°C without signs of fat blooming. The standard procedure for fat bloom testing at elevated (abuse) conditions comprises a cycled heating of the packed product in a heating chamber within a temperature range of 22°-35°C for 5 days and 22°C-50°C for 2 days (climatic chamber Binder KBF 720; 40% rel. humidity). The cycling has been applied for two consecutive weeks after which the samples have been placed at a constant temperature of 20-22°. If no visible sign of fat bloom appeared after 30 days of storage, the product was considered stable. The temperature profile is shown in Table 2.

**Table 2**

| | | | |
|---|---|---|---|
| | | | |
| Day 1 | 10h (22°C) | 6h (22-35°C) | 6h (35°-22°C) |
| Day 2 | 10h (22°C) | 6h (22-50°C) | 6h (50°-22°C) |
| Day 3 | 10h (22°C) | 6h (22-35°C) | 6h (35°-22°C) |
| Day 4 | 10h (22°C) | 6h (22-35°C) | 6h (35°-22°C) |
| Day 5 | 10h (22°C) | 6h (22-50°C) | 6h (50°-22°C) |
| Day 6 | 10h (22°C) | 6h (22-35°C) | 6h (35°-22°C) |
| Day 7 | 10h (22°C) | 6h (22-35°C) | 6h (35°-22°C) |

After day 7, the procedure continued automatically with Day 1.

Applying the above procedure to the tablets produced in Example 1 and 2, a panel of 5 people was inspecting the products after a period of 30 days. Sample evaluation was done according to the scale below:
0 = no fat bloom
1 = hard to notice
2 = some spots and slight grey haze
3 = many spots and slight grey haze
4 = dull, totally covered by grey haze, obviously noticeable fat bloom to a low degree
5 = dull, totally covered with a grey haze

The judgement is typically a comparison of the standard and the trial product.

A sample is regarded free of fat bloom when the average rating of all panellists is below 1.5.

### Example 4

### Base mass containing butter fat

Ingredients for the cocoa chocolates of the 'milk' No.3 were mixed and refined according to Table 3. All ingredients - besides lecithin and a certain amount of butter fat - were mixed in a double-jacketed blender (Stephan^{®} mixer, Hameln, Germany) at 50°C (15 min., 1000 rpm). Refining was done with a pilot plant 3-roll-refiner to a particle size of d90 < 30µm (Laser diffraction, Malvern). Base masses were conched with a pilot plant conche (60kg). The remaining fat and lecithin was added during conching. For the production of HRC, PGPR (0.2%, room temp.) and Sorbidex (7%, room temp.) were stepwise and manually mixed with the base mass (50°C). Then the mixture was deposited in moulds and subsequently microwaved (conditions that are sufficient to achieve a product surface temp. of 80-95°C). Demoulding was possible after cooling in fridge.

**Table 3**

| | **Milk Chocolate No.3** | **Milk Chocolate No.4** |
|---|---|---|
| Sugar | 42.00% | 40.00% |
| Cocoa liquor | 17.12% | 19,82% |
| Cocoa butter | | |
| Skimmed milk powder | 17.42% | 21.58% |
| Lactose | | |
| Milk fat | 22.76% | 17.90% |
| Lecithin | 0.70% | 0.70% |
| **Total** | **100%** | **100%** |
| | | |
| Ratio cocoa butter to liquid fat | 29.1:70.9 | 37.5:62.5 |

Milk chocolate No.3 is free of fat bloom after the conditions applied in Example 3, while Milk chocolate No.4 is showing small but visible spots of fat bloom.

If in the example described above, fat blends are used beyond the limits mentioned for example when the ratio of cocoa butter to liquid fat is 38.1:61.9, the chocolate confections show a defect in appearance when they are exposed to elevated temperatures (typically 30-50°C) followed by cooling below 20°C.

The defect is known as fat-bloom and results in grey spots or another pattern on the product surface. The main cause is uncontrolled fat crystallization.

Additionally, as found by an internal taste panel, fat blends beyond the limits mentioned are not acceptable in taste when compared to standard chocolate.

The chocolate or chocolate type composition according to the invention may be used for chocolate confectionery, cake, biscuits and other foods in which a cocoa confection is part of the composition.

As has been demonstrated above, a liquid fat having a SFC of 50% or less at 20°C may be used as a substitute for cocoa butter in a chocolate or chocolate type composition. The substitution of cocoa butter with this liquid fat prevents fat bloom while retaining an acceptable taste similar to conventional chocolate. The blend of cocoa butter and the liquid fat according to the invention thus allows for the preparation of HRC.

## Claims

1. A heat resistant cocoa confection composition comprising a blend of cocoa butter and a liquid fat in a weight ratio of from 33:66 to 20:80, wherein
the blend has a solid fat content at 20°C of less than 45%,
the liquid fat is selected from palm oil, soya oil, rapeseed oil, sunflower oil, milk fat or mixtures thereof,
the liquid fat is miscible with cocoa butter at all mixing ratios and
the liquid fat has a solid fat content at 20°C of 50% or less.

2. The composition according to claim 1, wherein the liquid fat is a fractionated, non-hydrogenated, refined non-lauric palm oil or anhydrous milk fat or a mixture thereof.

3. The composition according to claim 1 or 2, wherein the blend has a solid fat content at 20°C of less than 40%.

4. The composition according to any preceding claim, wherein the blend has a solid fat content at 20°C of less than 35%.

5. The composition according to any preceding claim, wherein the liquid fat has a solid fat content at 20°C of 45% or less.

6. The composition according to any preceding claim, wherein the liquid fat has a solid fat content at 20°C of 40% or less.

7. The composition according to any preceding claim, wherein the weight ratio of cocoa butter to liquid fat is from 25:75 to 20:80.

8. A blend comprising cocoa butter and a liquid fat in a weight ratio of from 33:66 to 20:80, wherein
the blend has a solid fat content at 20°C of less than 45%,
the liquid fat is selected from palm oil, soya oil, rapeseed oil, sunflower oil, milk fat or mixtures thereof,
the liquid fat is miscible with cocoa butter at all mixing ratios and
the liquid fat has a solid fat content at 20°C of 50% or less.

9. Use of a blend as defined in claim 8 for preventing fat blooming of a cocoa confection composition.

10. Use of a blend as defined in claim 8 for increasing the bloom-stability of a cocoa confection composition.

11. The use according to claim 9 or 10, wherein the blend has a solid fat content at 20 °C of less than 40%.

12. The use according to claim 9 or 10, wherein the blend has a solid fat content at 20 °C of less than 35%.

13. The use according to any of claims 9 to 12, wherein the ratio of cocoa butter to liquid fat is from 25:75 to 20:80.

14. The use according to claim 13, wherein the liquid fat is a fractionated, non-hydrogenated, refined non-lauric palm oil or anhydrous milk fat or a mixture thereof.

## Patentansprüche

1. Wärmebeständige Kakao-Konfekt-Zusammensetzung, umfassend eine Mischung aus Kakaobutter und einem flüssigen Fett in einem Gewichtsverhältnis von 33:66 bis 20:80, worin
die Mischung einen festen Fettgehalt bei 20°C von weniger als 45 % aufweist,
das flüssige Fett aus Palmöl, Sojaöl, Rapsöl, Sonnenblumenöl, Milchfett oder Mischungen davon ausgewählt wird,
das flüssige Fett mit Kakaobutter bei allen Mischungsverhältnissen mischbar ist und
das flüssige Fett einen festen Fettgehalt bei 20°C von 50 % oder weniger aufweist.

2. Zusammensetzung gemäß Anspruch 1, worin das flüssige Fett ein fraktioniertes, ungehärtetes, raffiniertes laurinsäurefreies Palmöl oder wasserfreies Milchfett oder eine Mischung davon ist.

3. Zusammensetzung gemäß Anspruch 1 oder 2, worin die Mischung einen festen Fettgehalt bei 20°C von weniger als 40 % aufweist.

4. Zusammensetzung gemäß mindestens einem der vorhergehenden Ansprüche, worin die Mischung einen festen Fettgehalt bei 20°C von weniger als 35 % aufweist.

5. Zusammensetzung gemäß mindestens einem der vorhergehenden Ansprüche, worin das flüssige Fett einen festen Fettgehalt bei 20°C von 45 % oder weniger aufweist.

6. Zusammensetzung gemäß mindestens einem der vorhergehenden Ansprüche, worin das flüssige Fett einen festen Fettgehalt bei 20°C von 40 % oder weniger aufweist.

7. Zusammensetzung gemäß mindestens einem der vorhergehenden Ansprüche, worin das Gewichtsverhältnis von Kakaobutter zu flüssige Fett 25:75 bis 20:80 beträgt.

8. Mischung, umfassend Kakaobutter und ein flüssiges Fett in einem Gewichtsverhältnis von 33:66 bis 20:80, worin die Mischung einen festen Fettgehalt bei 20°C von weniger als 45 % aufweist,
das flüssige Fett aus Palmöl, Sojaöl, Rapsöl, Sonnenblumenöl, Milchfett oder Mischungen davon ausgewählt wird,
das flüssige Fett mit Kakaobutter bei allen Mischungsverhältnissen mischbar ist und
das flüssige Fett einen festen Fettgehalt bei 20°C von 50 % oder weniger aufweist.

9. Verwendung einer Mischung wie in Anspruch 8 definiert zur Vorbeugung von Fettreifbildung einer Kakao-Konfekt-Zusammensetzung.

10. Verwendung einer Mischung wie in Anspruch 8 definiert zur Erhöhung der Fettreif-Stabilität einer Kakao-Konfekt-Zusammensetzung.

11. Verwendung gemäß Anspruch 9 oder 10, worin die Mischung einen festen Fettgehalt bei 20°C von weniger als 40 % aufweist.

12. Verwendung gemäß Anspruch 9 oder 10, worin die Mischung einen festen Fettgehalt bei 20°C von weniger als 35 % aufweist.

13. Verwendung gemäß mindestens einem der Ansprüche 9 bis 12, worin das Verhältnis von Kakaobutter zu flüssigem Fett 25:75 bis 20:80 beträgt.

14. Verwendung gemäß Anspruch 13, worin das flüssige Fett ein fraktioniertes, ungehärtetes, raffiniertes laurinsäurefreies Palmöl oder wasserfreies Milchfett oder eine Mischung daraus ist.

## Revendications

1. Composition de confiserie de cacao résistant à la chaleur comprenant un mélange de beurre de cacao et d'une matière grasse liquide dans un rapport en poids de 33:66 à 20:80, où
le mélange a une teneur en matières grasses solides à 20°C inférieure à 45 %,
la matière grasse liquide est sélectionnée parmi l'huile de palme, l'huile de soja, l'huile de colza, l'huile de tournesol, la matière grasse du lait, ou des mélanges de celles-ci,
la matière grasse liquide est miscible avec le beurre de cacao à tous les rapports de mélange et
la matière grasse liquide a une teneur en matières grasses solides à 20°C inférieure ou égale à 50 %.

2. Composition selon la revendication 1, dans laquelle la matière grasse liquide est une huile de palme non laurique raffinée, fractionnée, non hydrogénée ou une matière grasse du lait anhydre ou un mélange de celles-ci.

3. Composition selon la revendication 1 ou 2, dans laquelle le mélange a une teneur en matières grasses solides à 20°C inférieure à 40 %.

4. Composition selon l'une quelconque des revendications précédentes, dans laquelle le mélange a une teneur en matières grasses solides à 20°C inférieure à 35 %.

5. Composition selon l'une quelconque des revendications précédentes, dans laquelle la matière grasse liquide a une teneur en matières grasses solides à 20°C inférieure ou égale à 45 %.

6. Composition selon l'une quelconque des revendications précédentes, dans laquelle la matière grasse liquide a une teneur en matières grasses solides à 20°C inférieure ou égale à 40 %.

7. Composition selon l'une quelconque des revendications précédentes, dans laquelle le rapport en poids du beurre de cacao à la matière grasse liquide est de 25:75 à 20:80.

8. Mélange comprenant du beurre de cacao et une matière grasse liquide dans un rapport en poids de 33:66 à 20:80, où
le mélange a une teneur en matières grasses solides à 20°C inférieure à 45 %,
la matière grasse liquide est sélectionnée parmi l'huile de palme, l'huile de soja, l'huile de colza, l'huile de tournesol, la matière grasse du lait, ou des mélanges de celles-ci,
la matière grasse liquide est miscible avec le beurre de cacao à tous les rapports de mélange et
la matière grasse liquide a une teneur en matières grasses solides à 20°C inférieure ou égale à 50 %.

9. Utilisation d'un mélange tel que défini dans la revendication 8 pour empêcher un blanchiment gras d'une composition de confiserie de cacao.

10. Utilisation d'un mélange tel que défini dans la revendication 8 pour augmenter la stabilité au blanchiment gras d'une composition de confiserie de cacao.

11. Utilisation selon la revendication 9 ou 10, dans laquelle le mélange a une teneur en matières grasses solides à 20°C inférieure à 40 %.

12. Utilisation selon la revendication 9 ou 10, dans laquelle le mélange a une teneur en matières grasses solides à 20°C inférieure à 35 %.

13. Utilisation selon l'une quelconque des revendications 9 à 12, dans laquelle le rapport en poids du beurre de cacao à la matière grasse liquide est de 25:75 à 20:80.

14. Utilisation selon la revendication 13, dans laquelle la matière grasse liquide est une huile de palme non laurique raffinée, fractionnée, non hydrogénée ou une matière grasse du lait anhydre ou un mélange de celles-ci.
